# EUROPEAN PATENT APPLICATION

(11) **EP 2 960 748 A1**
(43) Date of publication of application: **30.12.2015**
(21) Application number: 13741959.4
(22) Date of filing: 26.03.2013
(51) Int. Cl.: G06F 1/32, G06F 1/16, G06F 1/20, G06F 1/28

(54) **ELECTRONIC DEVICE, SYSTEM, AND CONTROL METHOD**

(30) Priority: 22.02.2013 JP 2013033753
(71) Applicant: Kabushiki Kaisha Toshiba, Minato-ku Tokyo 105-8001 (JP)
(72) Inventor: TSUJI, Kazuhiko, Tokyo 105-8001 (JP)
(74) Representative: Henkel, Breuer & Partner
(86) International application number: PCT/JP2013/058802
(87) International publication number: WO 2014/128979

(57) **Abstract**

According to one embodiment, an electronic device to and from which an AC adaptor is attachable and detachable includes a detecting module and a control module. The detecting module detects whether the AC adaptor is attached to the electronic device. The control module controls suppression and non-suppression of power consumption of the electronic device depending upon whether the detecting module detects that the AC adaptor is attached to the electronic device.

## Description

### Technical Field

An embodiment of the present invention relates to a technique of suppressing the heat generated by an AC adaptor built in an electronic device.

### Background Art

AC adaptors detachable from electronic devices, such as computers, have recently been developed.

### Citation List

### Patent Literature

Patent Literature 1: Jpn. Pat. Appln. KOKAI Publication No. 7-93065

### Summary of Invention

### Technical Problem

When an AC adaptor is contained in an electronic device, its exposure area is reduced to thereby reduce its heat dissipation efficiency, whereby the temperature of the AC adaptor will easily rise. Therefore, when an AC adaptor is contained, there is a demand for suppression of the heat generated by the AC adaptor.

It is an object of the invention to provide an electronic device capable of suppressing the heat generated by an AC adaptor when the AC adaptor is contained in the device, and a power consumption control method.

### Solution to Problem

According to one embodiment, an electronic device to and from which an AC adaptor is attachable and detachable includes a detecting module and a control module. The detecting module detects whether the AC adaptor is attached to the electronic device. The control module controls suppression and non-suppression of power consumption of the electronic device depending upon whether the detecting module detects that the AC adaptor is attached to the electronic device.

### Brief Description of Drawings

FIG. 1 is a perspective view illustrating an example of an appearance of an electronic device according to an embodiment;
FIG. 2 is a block diagram illustrating the system configuration of the electronic device of the embodiment;
FIG. 3 is a block diagram illustrating the case where an AC adaptor is built in a computer, and the case where the AC adaptor is externally attached to the computer;
FIG. 4 is a flowchart illustrating a procedure for setting a power consumption limit value for the computer;
FIG. 5 is a flowchart illustrating a procedure for processing performed by a controller when the power consumption limit value is set at 80% of a rated power consumption value;
FIG. 6 is a flowchart illustrating another procedure for setting the power consumption limit value for the computer; and
FIG. 7 is a flowchart illustrating yet another procedure for setting the power consumption limit value for the computer.

### Description of Embodiments

An embodiment will be described with reference to the accompanying drawings.

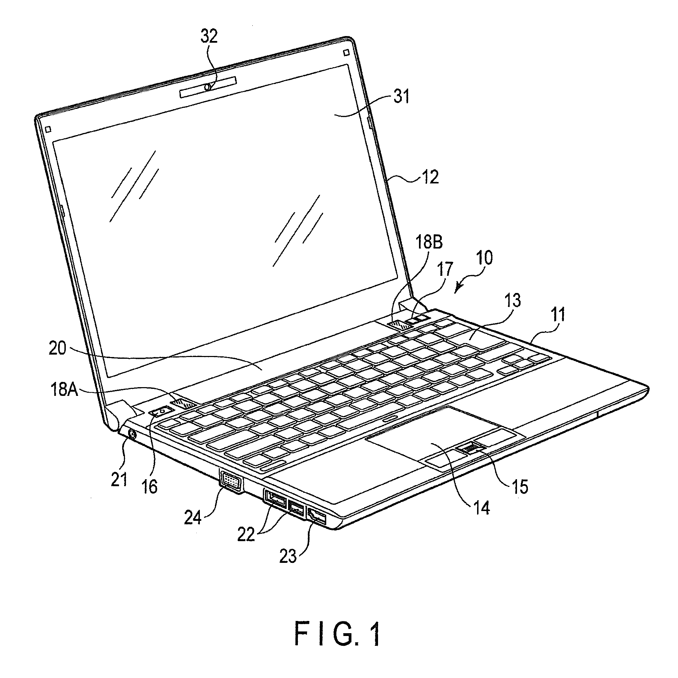

FIG. 1 is a perspective view illustrating the appearance structure of an electronic device according to the embodiment. The electronic device is, for example, a notebook type personal computer, a tablet type terminal, a desk-top type personal computer, etc. In the description below, the electronic device is a notebook type personal computer 10.

FIG. 1 is a perspective view showing the front portion of the computer 10 in the state where a display unit is open. As shown, the personal computer 10 comprises a computer main body 11 and a display unit 12. The display unit 12 incorporates a display unit, such as a liquid crystal display device (LCD) 31. Further, a camera (web camera) 32 is provided on the upper portion of the display unit 12.

The display unit 12 is attached to the computer main body 11 so that it can rotate between an open position at which the upper surface of the main body 11 is exposed, and a closed position at which the upper surface of the main body 11 is covered with the display unit 12. The computer main body 11 has a housing of a thin box shape. The upper surface of the main body 11 is provided with a keyboard 13, a touch pad 14, a finger print sensor 15, a power switch 16 for powering on/off the personal computer 10, several function buttons 17 and loud speakers 18A and 18B.

The computer main body also provides an external connector 21. The external connector 21 is mounted on a side surface of the main body 11, for example, on the left side surface. A plug incorporated in a cord connected to an external power supply is detachably connected to the external connector 21. As the external power supply, an AC adaptor can be used. The AC adaptor is used to convert commercial external power (AC power) into DC power. The cord connected to the external power supply is detachable. The AC adaptor can be attached to and detached from the computer main body 11 when the cord is detached. For instance, the AC adaptor is detachable from the computer 10. The AC adaptor can be contained in the housing of the computer main body 11 or attached to the outer surface thereof.

The AC adaptor can be reduced in size if it is used with a switching element of GaN. The GaN switching element enables the switching frequency to be increased to several MHz and the inductor and capacitor of the AC adaptor to be made compact.

A battery 20 is detachably attached to, for example, the rear end of the computer main body 11. Alternatively, the battery 20 may be contained in the personal computer 10.

The personal computer 10 is powered by the external power supply or the battery 20 (AC power driving, battery driving). When the external power supply is connected to the external connector 21 of the personal computer 10, or when the AC adaptor is contained in the computer main body 11, the personal computer 10 is powered by the external power supply. Further, the power from the external power supply is also used to charge the battery 20. When the external power supply is not connected to the external connector 21 of the personal computer 10, the personal computer 10 is powered by the battery 20.

The computer main body 11 is also provided with some USB ports 22, a High-Definition Multimedia Interface (HDMI) output terminal 23, and a RGB port 24.

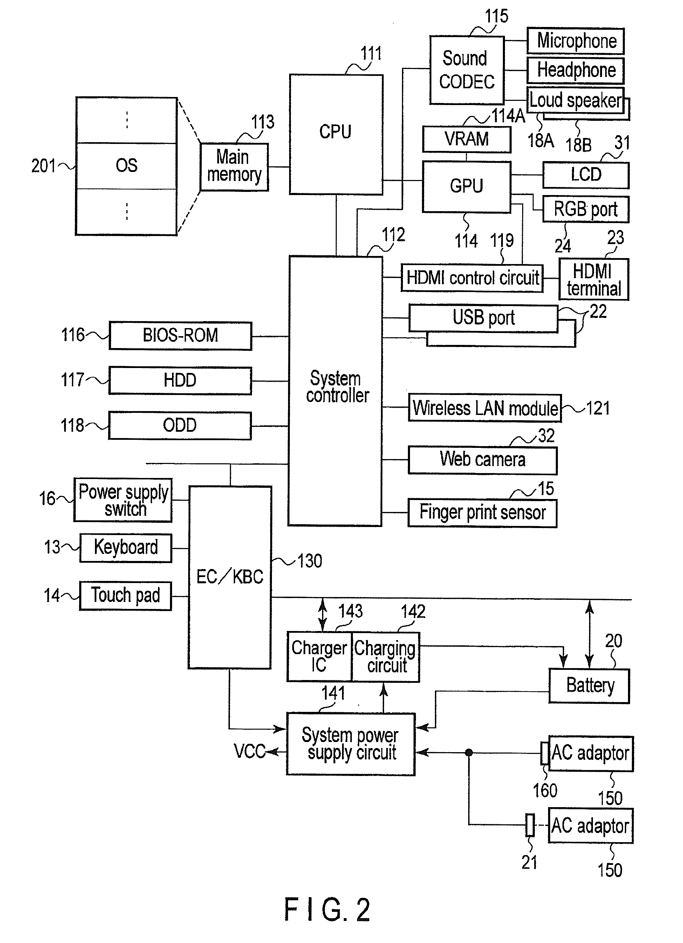

FIG. 2 shows the system configuration of the personal computer 10. As shown, the personal computer 10 comprises a CPU 111, a system controller 112, a main memory 113, a graphics processing unit (GPU) 114, a sound codec 115, a BIOS-ROM 116, a hard disk drive (HDD) 117, an optical disk drive (ODD) 118, a wireless LAN module 121, an embedded controller/keyboard controller IC (EC/KBC) 130, a system power supply circuit 141, a charging circuit 142, a charger IC 143, etc.

The CPU 111 is a processor for controlling the operation of each component of the personal computer 10. The CPU 111 executes various programs loaded from the HDD 117 onto the main memory 113. The programs include an operating system (OS) 201 and various application programs.

The CPU 111 also executes a Basic Input Output System (BIOS) stored in a BIOS-ROM 116 as a nonvolatile memory. The BIOS is a system program for controlling hardware.

The GPU 114 is a display controller for controlling an LCD 31 used as the display monitor of the personal computer 10. From the display data stored in a video memory (VRAM) 114A, the GPU 114 generates a display signal (LVDS signal) to be supplied to the LCD 31. The GPU 114 can also generate an analog RGB signal and an HDMI video signal from the display data. The analog RGB signal is supplied to an external display via the RGB port 24. The HDMI output terminal 23 can output an HDMI video signal (i.e., a non-compressed digital video signal) and a digital audio signal to the external display by means of a single cable. An HDMI control circuit 119 is an interface for sending the HDMI video signal and the audio signal to the external display via the HDMI output terminal 23.

The system controller 112 is a bride device for connecting the CPU 111 to each component. The system controller 112 contains a serial ATA controller for controlling the hard disk drive (HDD) 117 and the optical disk drive (ODD) 118.

Further, the system controller 112 is connected to various devices, such as the USB port 22, the wireless LAN module 121, the web cameral 32 and the finger print sensor 15.

Further, the system controller 112 communicates with each device connected thereto via a bus.

The EC/KBC 130 is connected to the system controller via a bus, and also connected to the charger IC 143 and the battery 20 via a bus.

The EC/KBC 130 is a power management controller for performing power management for the personal computer 10, and is realized as a one-chip microcomputer that contains a keyboard controller for controlling, for example, the keyboard (KB) 13 and the touch pad 14. The EC/KBC 130 has a function of powering on/off the personal computer 10 in accordance with user's operation of the power switch 16. The EC/KBC 130 performs the powering on/off control on the system power supply circuit 141.

The charger IC 143 is used to control the charging circuit 142 under the control of the EC/KBC 130. The EC/KBC 130, the charger IC 143 and the system power supply circuit 141 are powered by the battery 20 or an AC adaptor 150 even when the personal computer 10 is in the power-off state.

The system power supply circuit 141 generates power (driving power) to be supplied to each component, using the power of the battery 20 or the power of the AC adaptor 150 connected as an external power supply to the computer main body 11. The system power supply circuit 141 supplies power to the battery 20 via the charging circuit 142.

Under the control of the charger IC 143, the charging circuit 142 charges the battery 20 with the power supplied via the system power supply circuit 141.

The AC adaptor 150 can be attached to the computer 10. When the AC adaptor 150 is attached to the computer 10, the AC adaptor 150 is connected to a built-in connector 160.

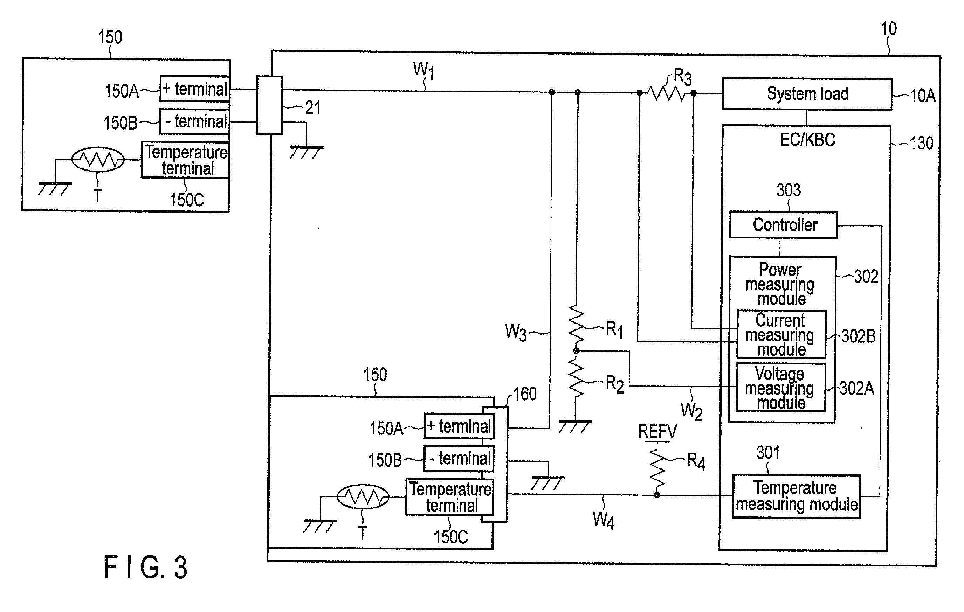

FIG. 3 shows the case where an AC adaptor is built in the computer 10, and the case where the AC adaptor is externally attached to the computer 10.

As shown in FIG. 3, the EC/KBC 130 comprises a temperature measuring module 301, a power measuring module 302, a controller 303, etc.

The AC adaptor 150 comprises a + terminal 150A, a - terminal 150B, a temperature terminal 150C, a thermistor T, etc.

Where the AC adaptor 150 is externally attached to the computer 10, the + terminal 150A and the - terminal 150B of the AC adaptor 150 are connected to the computer via the external connector 21. In this state, the + terminal 150A is connected to a system load 10A via wiring W₁. The system power supply circuit 141 which is not illustrated is inserted in the wiring W₁. The power from the + terminal 150A is supplied to the system load 10A via the system power supply circuit 141. The - terminal 150B is connected to ground. The temperature terminal 150C is not connected to the computer 10.

When the AC adaptor 150 is built in the computer 10, the + terminal 150A, the - terminal 150B and the temperature terminal 150C of the AC adaptor 150 are connected to the computer via the built-in connector 160. The + terminal 150A is connected to the system load 10A via wiring W₃ and the wiring W₁. The - terminal 150B is connected to ground. One end of the thermistor T is connected to the temperature terminal 150C. The other end of the thermistor T is connected to ground. The temperature terminal 150C is connected to the temperature measuring module 301 via wiring W₄.

One end of a resistor R₁ is connected to the wiring W₁. The other end of the resistor R₁ is connected to one end of a resistor R₂. The other end of the resistor R₂ is connected to ground. One end of wiring W₂ is connected between the other end of the resistor R₁ and the one end of the resistor R₂. The other end of the wiring W₂ is connected to a voltage measuring module 302A. A resistor R3 is inserted across the wiring W₁. A reference voltage REFV is applied to the wiring W₄ via a resistor R₄.

The voltage measuring module 302A measures the voltage Vₒᵤₜ of the wiring W₂. The voltage measuring module 302A calculates voltage V_{CC} applied by the AC adaptor 150, based on the voltage Vₒᵤₜ. The voltage V_{CC} is {(R₁ + R₂)/R₂} x Vₒᵤₜ.

A current measuring module 302B measures voltage Vᵢ applied to the resistor R₃ to calculate a current value I supplied from the AC adaptor 150. The current I is Vᵢ/R₃.

The power measuring module 302 calculates the power consumption of the computer 10 based on the measured voltage V_{CC} and current I.

The temperature measuring module 301 measures the voltage value of the wiring W₄ to calculate the resistance based on the resistance of the resistor R₄, the measured voltage and the reference voltage REFV. Since the thermistor T has its resistance varied in accordance with temperature, the resistance measured by the temperature measuring module 301 varied in accordance with temperature. Based on the measured resistance, the temperature measuring module 301 calculates the temperature.

The controller 303 determines whether the AC adaptor 150 is built in the computer 10, depending on whether the temperature measuring module 301 measures the temperature. If the AC adaptor 150 is not built in the computer 10, the voltage input to the temperature measuring module 301 is equal to the reference voltage REFV, which means that it cannot measure temperature. Namely, if the temperature measuring module 301 performs temperature measurement, the controller 303 determines that the AC adaptor 150 is built in the computer 10. In contrast, if the temperature measuring module 301 cannot measure temperature, the controller 303 determines that the AC adaptor 150 is not built in the computer 10.

The controller 303 sets a limit value for the power consumption of the computer 10 depending upon whether the AC adaptor 150 is built in the computer 10. Based on the set limit value, the controller 303 controls the power consumption of the computer 10.

If the AC adaptor 150 is built in the computer 10, the heat dissipation efficiency of the AC adaptor 150 is reduced, the temperature of the AC adaptor 150 will rise. Therefore, in the computer 10 of the embodiment, if the AC adaptor 150 is built in the computer 10, the power consumption of the computer 10 is suppressed to prevent the temperature of the AC adaptor 150 from rising.

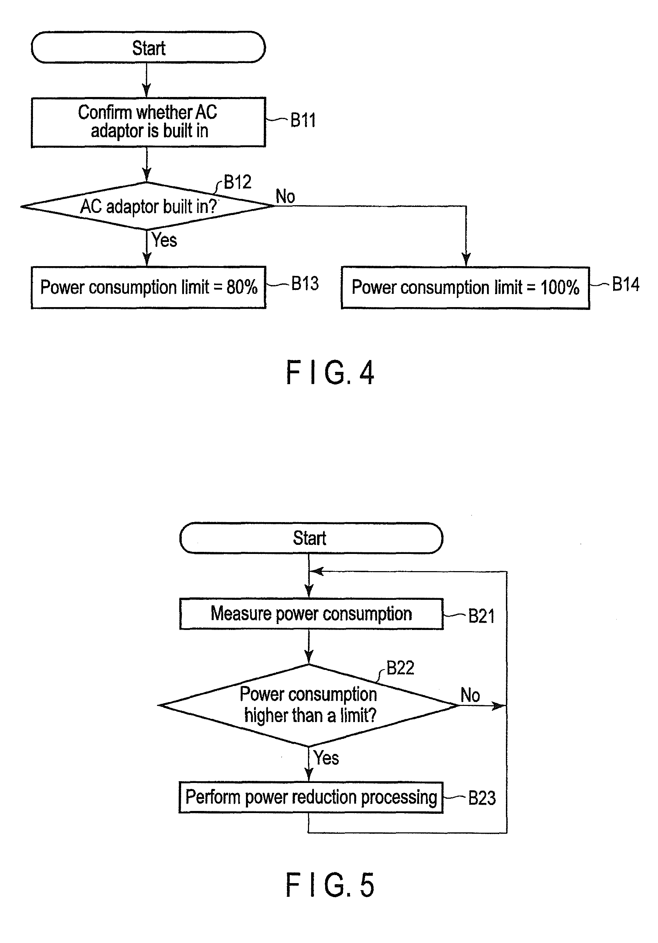

A procedure for setting a limit value for the power consumption of the computer 10 will now be described. FIG. 4 is a flowchart illustrating the procedure for setting a limit value for the power consumption of the computer 10.

The controller 303 confirms whether the AC adaptor 150 is built in the computer 10 (step B11). If it is determined that the AC adaptor 150 is built in (Yes at step B12), the controller 303 sets the limit value for the power consumption of the computer 10 to 80% of a rated power consumption value (step B13). If the AC adaptor 150 is not built in (No at step B12), the controller 303 sets the limit value for the power consumption of the computer 10 to 100% of the rated power consumption value (step B14).

A description will be given of a procedure of processing performed by the controller 303 when the limit value for the power consumption of the computer 10 is set to 80% of the rated power consumption value.

FIG. 5 is a flowchart illustrating the procedure of processing performed when the power consumption limit value is set at 80% of the rated power consumption value.

The power measuring module 302 measures the power consumption of the computer 10 (step B21). The controller 303 determines whether the power consumption is higher than a limit value (step B22). If it is determined that the power consumption is higher than the limit value (Yes at step B22), the controller 303 performs power reduction processing for reducing the power consumption of the computer 10 (step B23).

In the power reduction processing, the controller 303 gradually performs a plurality of power consumption control steps (1), (2), (3) and (4) described below, in order to suppress the power consumption below the limit value.

In, for example, the power reduction processing, the controller 303 executes power saving control in a priority order of (1), (2), (3) and (4). Namely, until the power consumption reaches the limit value, the controller 303 gradually executes (1) charge limitation (if the battery 20 is being charged), (2) charge stop (if the battery 20 is being charged), (3) processing capacity reduction of the CPU 111, and (4) luminance reduction of the LCD 31.

### (Modification)

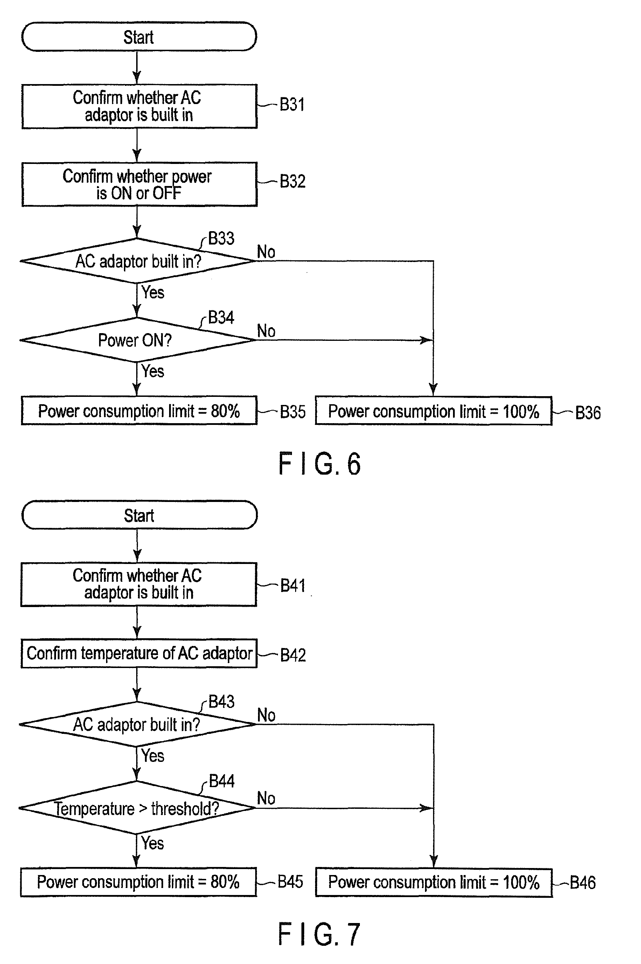

FIG. 6 is a flowchart illustrating another procedure for setting the power consumption limit value for the computer.

The controller 303 confirms whether the AC adaptor 150 is built in the computer 10 (step B31). The controller 303 confirms whether the computer 10 is in the ON or OFF state (step B32). If the AC adaptor 150 is not built in (No at step B33), the controller 303 sets the limit value for the power consumption of the computer 10 to 100% of the rated power consumption value (step B36).

If it is determined that the AC adaptor 150 is built in (Yes at step B33), and if the computer is not in the ON state (No at step B34), the controller 303 sets the limit value for the power consumption of the computer 10 to 100% of the rated power consumption value (step B36).

If it is determined that the AC adaptor 150 is built in (Yes at step B33), and if the computer is in the ON state (Yes at step B34), the controller 303 sets the limit value for the power consumption of the computer 10 to 80% of the rated power consumption value (step B35).

FIG. 7 is a flowchart illustrating yet another procedure for setting the power consumption limit value for the computer.

The controller 303 confirms whether the AC adaptor 150 is built in the computer 10 (step B41). The controller 303 confirms the temperature of the AC adaptor 150 (step B42). If the AC adaptor 150 is not built in (No at step B43), the controller 303 sets the limit value for the power consumption of the computer 10 to 100% of the rated power consumption value (step B46).

If the AC adaptor 150 is built in (Yes at step B43), and if the temperature of the AC adaptor 150 is not higher than a threshold (No at step B44), the controller 303 sets the limit value for the power consumption of the computer 10 to 100% of the rated power consumption value (step B46).

In contrast, if the AC adaptor 150 is built in (Yes at step B43), and if the temperature of the AC adaptor 150 is higher than the threshold (Yes at step B44), the controller 303 sets the limit value for the power consumption of the computer 10 to 80% of the rated power consumption value (step B45).

In the electronic device of the embodiment, when the AC adaptor 150 is built in the computer 10, the power supplied from the AC adaptor 150 is reduced by setting the power consumption of the computer 10 lower than a set value, thereby suppressing the heat generated by the AC adaptor 150.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

## Claims

1. An electronic device to and from which an AC adaptor is attachable and detachable, comprising:
a detecting module configured to detect whether the AC adaptor is attached to the electronic device; and
a control module configured to control suppression and non-suppression of power consumption of the electronic device depending upon whether the detecting module detects that the AC adaptor is attached to the electronic device.

2. The electronic device of claim 1, further comprising a first measuring module configured to measure power consumption of the electronic device,
wherein the control module makes the power consumption of the electronic device less than a set value, when the detecting module detects that the AC adaptor is attached to the electronic device, and the power consumption measured by the first measuring module exceeds the set value.

3. The electronic device of claim 2, wherein the control module makes the power consumption of the electronic device less than the set value, when the detecting module detects that the AC adaptor is attached to the electronic device, the electronic device is in an ON state, and the power consumption measured by the first measuring module exceeds the set value.

4. The electronic device of claim 2, further comprising a second measuring module configured to measure a temperature of the AC adaptor,
wherein the control module makes the power consumption of the electronic device less than the set value, when the detecting module detects that the AC adaptor is attached to the electronic device, the temperature measured by the second measuring module exceeds a threshold, and the power consumption measured by the first measuring module exceeds the set value.

5. The electronic device of claim 1, wherein
the AC adaptor comprises a thermistor to be connected to the electronic device when the AC adaptor is attached to the electronic device; and
the detecting module detects whether the AC adaptor is attached to the electronic device in accordance with whether the thermistor is connected.

6. A system comprising an AC adaptor, and an electronic device to and from which the AC adaptor is attachable and detachable, the electronic device comprising:
a detecting module configured to detect whether the AC adaptor is attached to the electronic device; and
a control module configured to control suppression and non-suppression of power consumption of the electronic device depending upon whether the detecting module detects that the AC adaptor is attached to the electronic device.

7. A control method of an electronic device to and from which an AC adaptor is attachable and detachable, comprising:
determining whether the AC adaptor is attached to the electronic device; and
controlling suppression and non-suppression of power consumption of the electronic device depending upon whether the AC adaptor is attached to the electronic device.
